(19) Europäisches Patentamt
European Patent Office
Office européen des brevets

(11) EP 1 106 637 A1

# (12) EUROPEAN PATENT APPLICATION

(43) Date of publication:
**13.06.2001 Bulletin 2001/24**

(51) Int Cl.[7]: **C08G 18/48**, C08G 18/63, C08G 18/62

(21) Application number: **99124419.5**

(22) Date of filing: **07.12.1999**

(84) Designated Contracting States:
**AT BE CH CY DE DK ES FI FR GB GR IE IT LI LU MC NL PT SE**
Designated Extension States:
**AL LT LV MK RO SI**

(71) Applicants:
- **HYUNDAI MOTOR COMPANY**
  **Jongro-ku, Seoul 110-793 (KR)**
- **Kumho Mitsui Chemical Inc.**
  **Seoul 110-110 (KR)**

(72) Inventors:
- **Lee, Byoung Jin**
  **Ulsan 683-360 (KR)**
- **Lee, Sang Hwa**
  **Ulsan 683-360 (KR)**
- **Park, Heon Hee**
  **Seoul 121-210 (KR)**
- **Lim, Jong Yoon**
  **Yeosu, Jullanam-do 550-240 (KR)**

(74) Representative: **Viering, Jentschura & Partner**
**Postfach 22 14 43**
**80504 München (DE)**

## (54) A foaming composition of soft polyurethane

(57) The present invention relates to a foaming composition of soft polyurethane used for the cushion insert for vehicles and more specifically, to a foaming composition of soft polyurethane which comprises polymer-polyol wherein solid polymer synthesized from acrylonitrile or styrene monomer is grafted or dispersed in polyetherpolyol, polyol wherein polyetherpolyol is mixed, crosslinkage agent, amine catalysts, foaming agent and organic silicon defoaming agent, and which provides greatly improved productivity and reduced inferiority owing to the natural crushing of independent foam cells through chemical method rather than physical method.

EP 1 106 637 A1

## Description

## BACKGROUND OF THE INVENTION

### Field of the Invention

The present invention relates to a foaming composition of soft polyurethane used for the cushion insert for vehicles and more specifically, to the foaming composition of soft polyurethane which provides greatly improved productivity and reduced inferiority owing to the natural crushing of independent foam cells through chemical method rather than physical method by reacting resin pre-mix containing polymerpolyol wherein solid polymer synthesized from acrylonitrile or styrene monomer is grafted or dispersed in polyetherpolyol, polyol wherein polyetherpolyol is mixed, crosslinking agent, amine catalysts, foaming agent and organic silicon defoaming agent with organic polyisocyanate.

Soft foams for seat cushion mold are divided into cold cure mold foams and hot cure mold foams depending on the manufacturing method. In the manufacture of hot cure mold foams, artificial cell-opening process is unnecessary because the foamed cell is naturally opened through chemical reaction in the mold. However, in the manufacture of cold cure mold foams, artificial cell-opening process (hereinafter referred to as "crushing") has been required because the closed cell is formed. In the manufacture of hot cure mold foams, the source solution is injected at 35-40°C of mold temperature and the foam is solidified at 100-200°C. For cold cure mold foams, the source solution is injected at relatively high mold temperature of 50-70°C and the foam is solidified at relatively low temperature of 50-70°C. The resulting foams contain a certain amount of closed cells and they cause the constriction of the foams. Therefore, the cold-cure type mold foams need crushing process. The closed cells have been opened either by crushing of passing the foams through a circular frame with narrower width than the foams or by crushing of vacuumizing the foams.

The conventional soft foams for cold cure mold are manufactured by injecting mixture of isocyanate and resin premix in the mold heated to 50-70°C and solidifying for 3-10 min. The formed foams are processed with crushing in order to open the closed cells. In spite of the advantage of fast solidification at low temperature, the crushing of the closed cells included in the foams render the increase of the cost of utilities, electric power, manpower and other expenditures. Therefore, a new technology which excludes crushing by naturally opening the foams through chemical reaction of isocyanate and resin premix is being required.

## SUMMARY OF THE INVENTION

The inventors made intensive efforts to solve the problems. As a result, it was realized that with the reaction of resin premix containing polymerpolyol wherein solid polymer synthesized from acrylonitrile or styrene monomer is grafted or dispersed in polyetherpolyol, polyol wherein polyetherpolyol is mixed, crosslinking agent, amine catalysts, foaming agent and organic silicon defoaming agent with organic polyisocyanate, the foam yield is greatly improved, and the crushing process becomes unnecessary due to the increased crushability due to the naturally open cells through chemical reaction.

Accordingly, an object of this invention is to provide a foaming composition of soft polyurethane which provides greatly improved productivity and reduced inferiority owing to the natural crushing of independent foam cells through chemical method rather than physical method.

### Detailed Description of the Invention

The present invention is directed to a foaming composition of soft polyurethane which comprises:

(a) resin premix containing 80-95 wt.% of polyol mixture wherein polyetherpolyol with 2-4 functional groups and molecular weight of 6,000-10,000 and polymerpolyol wherein solid polymer synthesized from acrylonitrile, styrene or monomer mixture thereof is grafted or dispersed in polyetherpoylol with the molecular weight of 4,000-8,000 are mixed in the range of 95:5-50:50 weight ratio, 0.01-2.0 wt.% of amine or glycol crosslinking agent, 0.2-3.0 wt.% of tertiary amine catalyst, 2.0-5.0 wt.% of water and 0.1-2.0 wt.% of organic silicon defoaming agent; and
(b) organic polyisocyanate containing 20-40 wt.% of isocyanate group,

wherein an equivalence ratio of said resin premix (a) and organic polyisocyanate (b) is 1:0.5-1:1.5.

The detailed description of the present invention is given hereunder.

The present invention is characterized by manufacturing naturally crushed soft polyurethane mould foams by the chemical reaction of resin premix and organic polyisocyanate in the mould.

The foaming composition of the present invention comprises resin premix and organic polyisocyanate. The resin premix is prepared by adding crosslinking agent, catalyst, foaming agent and organic silicon defoaming agent to a polyol mixture of polyetherpolyol and polymerpolyol. The mixture of polyetherpolyol and polymerpolyol is contained in the resin premix in a range of 80-95 wt.% with respect to the total weight of the resin premix.

The polyol mixture contained in the resin premix is prepared by mixing at least one polyetherpolyol (also designated polyetherpolyol 1 hereinafter) which has 2-4 functional groups, of which at least 13 mol % is primary hydroxyl group, and whose molecular weight is 6,000-10,000 and polymerpolyol wherein solid polymer synthesized from acrylonitrile or styrene monomer is dispersed or grafted in at least one polyetherpolyol with 2-4 functional groups (also designated polyetherpolyol 2b hereinafter), of which at least 13 mol % is primary hydroxyl group, and whose molecular weight is 4,000-8,000. The polyetherpolyol 1 and the polymerpolyol are mixed in a weight range (mixing ratio) of 95: 5-50:50 wt.%. If the mixing ratio is beyond the above range, the solidity, formation and physical properties of the foams deteriorate. The preferable mixture ratio is 85:15-65:35.

The resin premix is prepared by adding crosslinking agent, catalyst, foaming agent and organic silicon defoaming agent to the above polyol mixture.

The polyetherpolyol 1 can be the polymerisation product of ethylene oxide, propylene oxide or other monomers known to the person skilled in the art. Mixtures of such monomers can also be used. The polyetherpolyol is preferably made from ethylene oxide and propylene oxide and mixtures thereof. In the latter case, the ratio of ethylene oxide to propylene oxide is not critical itself. The polyetherpolyol 1 can be a mixture of several polyetherpolyols.

For the preparation of the solid polymer acrylonitrile and sytrene monomers can be used alone or as a mixture. The mixing ratio of the two monomers is 0-100 wt.%:100-0 wt.%. The molecular weight of the solid polymer is dependent on the monomers used.

10-40 wt.% of the solid polymer is grafted or dispersed with the polyetherpolyol 2b for the preparation of the polymerpolyol.

Glycol or amine crosslinking agents are used. Examples include ethylene glycol, diethylene glycol, triethylene glycol, dipropylene glycol, 1,4-butanediol, 1,6-hexanediol, pentaerythritol, diethanolamine, triethanolamine, ethylenediamine, triethyltetramine, methyleneorthochloroaniline, 4,4-diphenylmethanediamine, 2,6-dichloro-4,4-diphenylmethanediamine, 2,4-toluenediamine and 2,6-toluenediamine. The desirable content of the crosslinking agent is 0.01-2.0 wt.% of the total resin premix. If the content is less than 0.01 wt.%, crosslinkage of the resin premix is insufficient, and if it exceeds 2.0 wt.%, it requires the crushing process due to the increased independent cells.

For catalyst of the present invention, even though polyurethane foams used for the conventional catalysts can be used, a tertiary amine catalyst is desirable. One or a mixture of more than one selected from the group consisting of triethylamine, bisdimethylaminoethyl ether, tripropylamine, triisopropanediolamine, tributylamine, triethylamine, N-methylmorpholine, diethylenetriamine bis(2-(N,N-diethylamino)ethyl)ether and their salts can be used. The desirable content of the catalyst is 0.2-3.0 wt.% of the total resin premix. If the content is less than 0.2 wt.%, the reaction is retarded so that the solidification and productivity becomes poor. And if the catalyst content exceeds 3.0 wt.%, there arises a problem such as reduced endurance or fogging of the foams.

Water used for the foaming agent is desirable to be in the range of 2.0-5.0 wt.% of the total resin premix.

Organic silicon defoaming agent plays a role of preventing the unification or destruction of cells and forming uniform cells, when isocyanate and water react to produce gaseous carbon dioxide and the gas expands to form cells due to the heat of reaction. Common organic silicon defoaming agent used for the manufacture of soft cold cure mould foams can be used either alone or mixed. The desirable content is 0.1-2.0 wt.% of the total resin premix.

Various stabilizing agent, filling agent, coloring agent, deflaming agent or settling agent can be used together if necessary.

The said resin premix and organic polyisocyanate with 20-40 wt.% of isocyanate groups are mixed in the range of 1:0.5-1:1.5 equivalence ratio and reacted to obtain opened soft cold cure mould foams. If the isocyanate group content of the polyisocyanate is less than 20 wt.%, the specific gravity increases, and if it exceeds 40 wt.%, problems such as solidity and soldifying rate arise. The organic polyisocyanate of the present invention, which is used for the conventional compound, is selected from the group consisting of aliphatic and aromatic polyisocyanates known to the person skilled in the art. The organic isocyanate used in the present invention can be a mixture of several polyisocyanates.

The mechanical strength (extensibility, heat resistance and tension resistance) of the opened-cell soft polyurethane foams prepared by the present invention is superior to the closed-cell soft polyurethane foams.

The resin premix and polyisocyanate are mixed in the range of 1:0.5-1:1.5 equivalence ratio and injected to a mold heated to 50-70°C to prepare soft cold cure mold foams.

"Index" means a stoichiometric index of isocyanate reacting with the compound having active hydrogens in the resin premix. Index of isocyanate is calculated by the following equation.

Index of Isocyanate = (Isocyanate amount actually used)/ (Theoretically required isocyanate amount)

After mixing the resin premix and organic polyisocyanate, the mixture is stirred and inserted into a 200x 200x 200mm open box to foam freely. The sinking height after the foam is defoamed at the maximum height is expressed in % to measure the settling. The reaction mixture is injected into a 400x 400x 100mm aluminum test mould preheated to 50-70°C, 20% excessively of the minimum filling amount, and the mold is capped. After taking out the foams 5 min after the stirring of resin premix and organic polyisocyanate, the crushability is evaluated by measuring the difference of the force required to compress the same 50% firstly and the force required to compress the same 50% secondly with universal test machine. Crushability is the measuring of the force required to open the closed-cells in the foams and it provides a criterion for determining if the crushing process is necessary or not. The less the crushablility, the less the closed-cells.

The test results of the soft polyurethane mould foams prepared from the present invention show greatly improved productivity and reduced inferiority.

The following examples are intended to be illustrative of the present invention and should not be construed as limiting the scope of this invention defined by the appended claims.

**Examples 1-6**

Organic polyisocyanate whose toluenediisocyanate content is 20-40 wt.% of the total isocyanate and isocyanate group content is 36.5 wt.% was used.

Resin premix was prepared by mixing polyol, water, catalyst, crosslinking agent and organic silicon defoaming agent as in the following Table 1. 200g of the resin premix regulated to 25± 1°C was mixed with 92g of organic polyisocyanate. After stirring vigorously for 5 sec, the same was injected into a 200x 200x 200mm box. After measuring the settling, the central part of the foams was bisected by 100x 100x 50mm in order to measure the core density the following day. The result is shown in Table 1.

Settling and core density decreased with the increase of crosslinking agent.

Table 1

| | | Examples | | | | | |
|---|---|---|---|---|---|---|---|
| | | 1 | 2 | 3 | 4 | 5 | 6 |
| Resin premix | Polyol A[1)] | 280 | 280 | 280 | 280 | 280 | 280 |
| | Polyol B[2)] | 120 | 120 | 120 | 120 | 120 | 120 |
| | Polyol C[3)] | 10 | 10 | 10 | 10 | 10 | 10 |
| | $H_2O$[4)] | 14 | 14 | 14 | 14 | 14 | 14 |
| | L-3002[5)] | 2.8 | 2.8 | 2.8 | 2.8 | 2.8 | 2.8 |
| | SRX-274C[6)] | 1.2 | 1.2 | 1.2 | 1.2 | 1.2 | 1.2 |
| | DABCO 33LV[7)] | 1.08 | 1.40 | 0.40 | 1.08 | 1.08 | 1.08 |
| | NTAX A-1[8)] | 0.6 | 0.48 | 0.6 | 0.6 | 0.6 | 0.6 |
| | DEOA[9)] | 2.0 | 2.0 | 2.0 | 0.0 | 0.8 | 4.0 |
| Isocyanate | MC-70[10)] | 198.0 | 198.0 | 198.0 | 191.8 | 194.3 | 204.2 |
| | Index | 95 | 95 | 95 | 95 | 95 | 95 |

4) Distilled water or ion exchange water
5) Organic silicon surfactant, Witco Co.
6) Organic silicon surfactant, Torey Co.
6) Organic silicon surfactant, Torey Co.
7) Amine catalyst, Air Product Co.
8) Amine catalyst, Tosso Co.
9) Crosslinking agent, diethanolamine, Korea Polyol Co.
10) NCO% 36.5 Kumho Mitsui Chemical Co. Ltd.
6) Organic silicon surfactant, Torey Co.
6) Organic silicon surfactant, Torey Co.

Table 1 (continued)

| | | Examples | | | | | |
|---|---|---|---|---|---|---|---|
| | | 1 | 2 | 3 | 4 | 5 | 6 |
| Settling (%) | | 8.8 | 7.1 | 4.6 | 15.5 | 12.2 | 8.3 |
| Core density (kg/ m') | | 42.0 | 39.6 | 37.7 | 43.9 | 41.7 | 37.3 |

Polyol A has a molecular weight of 6,500. Polyol C has a molecular weight of 6,000. The molecular weight of the polyetherpolyol used for polyol B (the polymerpolyol) is 6,000. Polyol B was prepared by dispersing 20 wt.% of the solid polymer synthesized from 50. wt% of acrylonitrile and 50 wt.% of styrene in the above polyether polyol of OHV 28 mg KOH/g.

Examples 7-12

Resin premix was prepared as in the following Table 2. 200g of the resin premix regulated to 25± 1°C was mixed with 92g of organic polyisocyanate. After stirring vigorously for 5 sec, the same was injected to a 200x 200x 200mm box. After measuring the settling, the central part of the foams was bisected by 100x 100x 50mm in order to measure the core density the following day. Generally, settling provides the determination of stable cell structure. If a value of settling is small, the cell structure is stable and the forming is favorable. However, the increased closed cells render the artificial cell-opening process. If a value of settling is large, the cell is unstable and formation weight increases. Therefore, small settling with large crushability is desirable.

Resin premix was prepared by mixing polyol, water, catalyst, crosslinking agent and defoaming agent as in Table 2. 640g of the resin premix regulated to 25± 1°C was mixed with 275g of organic polyisocyanate with 50.0kg/ $m^3$ of excess density. After stirring vigorously for 5 sec, the same was injected to a 400x 400x 100mm aluminum mold. The mold was capped and five minutes after stirring, crushability was determined by measuring the difference of the force required to compress the same 50% firstly and the force required to compress the same 50% secondly with universal test machine.

With the increase of crosslinking agent content the settling and density decreased and the crushablity became poor. The crushability improved with the decrease of the ratio of resin catalyst (DABCO 33LV) and urea catalyst (NIAX A-1). However, it was unfavorable to minimize the density due to the increased settling.

Table 2

| | | Examples | | | | | |
|---|---|---|---|---|---|---|---|
| | | 7 | 8 | 9 | 10 | 11 | 12 |
| Resin | Polyol A | 420 | 420 | 420 | 420 | 420 | 420 |
| | Polyol B | 180 | 180 | 180 | 180 | 180 | 180 |
| | Polyol C | 15 | 15 | 15 | 15 | 15 | 15 |
| | $H_2O$ | 21 | 21 | 21 | 21 | 21 | 21 |
| premix | L-3002 | 4.2 | 4.2 | 4.2 | 4.2 | 4.2 | 4.2 |
| | SRX-274C | 1.8 | 1.8 | 1.8 | 1.8 | 1.8 | 1.8 |
| | DABCO 33LV | 1.62 | 2.1 | 2.4 | 1.62 | 1.62 | 1.62 |
| | NTAX A-1 | 0.9 | 0.72 | 0.6 | 0.9 | 0.9 | 0.9 |
| | DEOA | 3.0 | 3.0 | 3.0 | 0.0 | 1.2 | 6.0 |
| Isocyanate | MC-70 | 297.0 | 297.0 | 297.0 | 287.7 | 291.4 | 306.3 |
| | Index | 95 | 95 | 95 | 95 | 95 | 95 |
| Settling (%) | | 8.8 | 7.1 | 4.6 | 15.5 | 12.2 | 8.3 |
| Core density (kg/$M^3$) | | 42.0 | 39.6 | 37.7 | 43.9 | 41.7 | 37.3 |
| Crushability[1)] | | 0.0 | 6.5 | 26.3 | 0.0 | 0.0 | 2.7 |

1) Force-to-Crush, kg/314$cm^2$ (400× 400× 10mm), Difference of forces required to compress the sample 50% firstly and secondly

Examples 13-18

Resin premix was prepared as in the following Table 3. 200g of the resin premix regulated to 25± 1°C was mixed with 92g of organic polyisocyanate. After stirring vigorously for 5 sec, the same was injected to a 200x 200x 200mm box. After measuring the settling, the central part of the foams was bisected by 100x 100x 50mm in order to measure the core density the following day. Also, resin premix was prepared by mixing polyol, water, catalyst, crosslinking agent and defoaming agent as in Table 3. Resin premix regulated to 25± 1°C was mixed with organic polyisocyanate with 55.0kg/m$^3$ of excess density. After stirring vigorously for 5 sec, the same was injected to a 400x 400x 100mm aluminum mould. The mould was capped and five minutes after stirring, crushability was determined by measuring the difference of the force required to compress the same 50% firstly and the force required to compress the same 50% secondly with universal test machine.

Crushability varied with the contents of primary, secondary and tertiary amines. With the increase of primary and secondary amines, the settling and density decreased and the crushability became poor. Namely, with the increase of primary amines, noncrushing became unfavorable.

Table 3

| | | Examples | | | | | |
|---|---|---|---|---|---|---|---|
| | | 13 | 14 | 15 | 16 | 17 | 18 |
| Resin premix | Polyol A | 490 | 490 | 490 | 490 | 490 | 490 |
| | Polyol B | 210 | 210 | 210 | 210 | 210 | 210 |
| | Polyol C | 17.5 | 17.5 | 17.5 | 17.5 | 17.5 | 17.5 |
| | $H_2O$ | 21 | 21 | 21 | 21 | 21 | 21 |
| | L-3002 | 4.9 | 4.9 | 4.9 | 4.9 | 4.9 | 4.9 |
| | SRX-274C | 2.1 | 2.1 | 2.1 | 2.1 | 2.1 | 2.1 |
| | DABCO 33LV | 1.89 | 2.45 | 2.8 | 2.8 | 2.8 | 2.8 |
| | NTAX A-1 | 1.05 | 0.84 | 0.7 | 0.7 | 0.7 | 0.7 |
| | DEOA | 7.0 | 7.0 | 7.0 | 0.0 | 1.4 | 3.8 |
| Isocyanate | MC-70 | 297.8 | 297.8 | 297.8 | 267.6 | 270.1 | 273.3 |
| | Index | 95 | 95 | 95 | 95 | 95 | 95 |
| Primary amine, mg KOH/g | | 3.89 | 3.79 | 3.76 | 0.10 | 0.51 | 1.81 |
| Tertiary amine, mg KOH/g | | 2.78 | 2.85 | 2.95 | 1.72 | 2.13 | 2.49 |
| Settling (%) | | 7.6 | 7.3 | 8.7 | 11.0 | 4.9 | 5.2 |
| Core density (kg/ m$^3$) | | 43.5 | 41.3 | 40.7 | 49.1 | 43.2 | 41.7 |
| Excess density (kg/ m$^3$) | | 54.7 | 54.9 | 55.2 | 55.0 | 54.9 | 54.8 |
| Crushability | | 8.5 | 17.8 | 23.0 | 0 | 0 | 0.4 |

As described in detail above, the soft polyurethane foams of the present invention is prepared by reacting resin premix prepared by mixing polyol, which is a mixture of polyetherpolyol and polymerpolyol, amine or glycol crosslinking agent, tertiary amine catalyst, foaming agent and organic silicon defoaming agent with organic polyisocyanate in the predetermined equivalence ratio. The present invention provides greatly improved productivity and reduced inferiority owing to the natural crushing of independent foam cells through chemical method rather than physical method.

## Claims

**1.** A foaming composition of soft polyurethane which comprises

(a) resin premix containing 80-95 wt.% of polyol mixture wherein polyetherpolyol with 2-4 functional groups and molecular weight of 6,000-10,000 and polymerpolyol wherein solid polymer synthesized from acrylonitrile, styrene or monomer mixtuure thereof is grafted or dispersed in polyletherpoylol with the molecular weight of 4,000-8,000 are mixed in the range of 95:5-50:50 weight ratio, 0.01-2.0 wt.% of amine or glycol crosslinking agent, 0.2-3.0 wt.% of tertiary amine catalyst, 2.0-5.0 wt.% of water and 0.1-2.0 wt.% of organic silicon defoaming agent; and

(b) organic polyisocyanate containing 20-40 wt.% of isocyanate group,

wherein an equivalence ratio of said resin premix (a) and organic polyisocyanate (b) is 1:0.5-1:1.5.

European Patent Office

# EUROPEAN SEARCH REPORT

Application Number
EP 99 12 4419

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 692 507 A (BASF CORP.) 17 January 1996 (1996-01-17) * claims 1,5,6,10 * | 1 | C08G18/48<br>C08G18/63 |
| Y | US 5 773 483 A (ELING BEREND ET AL) 30 June 1998 (1998-06-30) * column 4, line 4 - line 20; claims 1,2,5; example 3 * | 1 | |
| A | US 4 119 582 A (MATSUBARA KIYOSHI ET AL) 10 October 1978 (1978-10-10) * column 6, line 1 - column 7, line 43; claims 1-3 * | 1 | |
| A | EP 0 553 848 A (ASAHI GLASS CO LTD) 4 August 1993 (1993-08-04) * page 4, line 4 - page 5, line 27; claims 1,2,6,10 * | 1 | |

TECHNICAL FIELDS SEARCHED (Int.Cl.7)

C08G

The present search report has been drawn up for all claims

| Place of search | Date of completion of the search | Examiner |
|---|---|---|
| BERLIN | 17 May 2000 | Angiolini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 12 4419

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2000

| Patent document cited in search report | Publication date | Patent family member(s) | Publication date |
|---|---|---|---|
| EP 692507 A | 17-01-1996 | CA 2170535 A | 25-01-1996 |
| | | WO 9601867 A | 25-01-1996 |
| | | US 5607982 A | 04-03-1997 |
| US 5773483 A | 30-06-1998 | AU 667779 B | 04-04-1996 |
| | | AU 6504794 A | 08-11-1994 |
| | | CA 2158653 A | 27-10-1994 |
| | | CN 1120849 A,B | 17-04-1996 |
| | | CN 1176261 A | 18-03-1998 |
| | | DE 69406656 D | 11-12-1997 |
| | | DE 69406656 T | 26-03-1998 |
| | | DE 69422198 D | 20-01-2000 |
| | | WO 9424184 A | 27-10-1994 |
| | | EP 0694048 A | 31-01-1996 |
| | | EP 0751114 A | 02-01-1997 |
| | | ES 2108441 T | 16-12-1997 |
| | | ES 2140775 T | 01-03-2000 |
| | | HK 1003836 A | 06-11-1998 |
| | | JP 8511287 T | 26-11-1996 |
| US 4119582 A | 10-10-1978 | JP 1135455 C | 14-02-1983 |
| | | JP 51091997 A | 12-08-1976 |
| | | JP 57028415 B | 16-06-1982 |
| EP 0553848 A | 04-08-1993 | DE 69324287 D | 12-05-1999 |
| | | DE 69324287 T | 19-08-1999 |
| | | JP 5305629 A | 19-11-1993 |
| | | US 5437822 A | 01-08-1995 |

EPO FORM P0459

For more details about this annex : see Official Journal of the European Patent Office, No. 12/82